# EUROPÄISCHE PATENTSCHRIFT

(11) **EP 3 870 005 B1**
(45) Veröffentlichungstag und Bekanntmachung des Hinweises auf die Patenterteilung: **06.04.2022**
(21) Anmeldenummer: 19805882.8
(22) Anmeldetag: 25.10.2019
(51) Int. Cl.: A47J 31/00, A47J 31/46

(54) **VERFAHREN ZUM ERZEUGEN EINES KAFFEEGETRÄNKS IN EINEM KAFFEEAUTOMATEN**
METHOD FOR CREATING A COFFEE BEVERAGE IN A COFFEE MACHINE
PROCÉDÉ DE PRODUCTION D'UNE BOISSON À BASE DE CAFÉ DANS UN DISTRIBUTEUR DE CAFÉ

(30) Priorität: 25.10.2018 EP 18202645
(43) Veröffentlichungstag der Anmeldung: 01.09.2021
(73) Patentinhaber: JURA Elektroapparate AG, 4626 Niederbuchsiten (CH)
(72) Erfinder: BÜTTIKER, Philipp, 4625 Oberbuchsiten (CH)
(74) Vertreter: EGLI-EUROPEAN PATENT ATTORNEYS
(86) Internationale Anmeldenummer: PCT/CH2019/000030
(87) Internationale Veröffentlichungsnummer: WO 2020/082190

(56) Entgegenhaltungen:
- EP-A1- 2 168 466
- EP-A1- 2 881 016
- EP-B1- 0 559 620
- WO-A1-2012/069958
- DE-A1-102019 206 635
- US-A1- 2013 337 132
- US-A1- 2015 359 381
- SuperautoPro: "Jura Impressa S9 One-Touch Video", Youtube, 22. August 2018 (2018-08-22), Seiten 1-3, XP054979190, Gefunden im Internet: URL:https://www.youtube.com/watch?v=b90-AK Hyo3E [gefunden am 2019-03-07]
- Anonymous: "Gebrauchsanweisung Kaffeevollautomat", , 19. Juli 2017 (2017-07-19), Seiten 1-80, XP055564525, Gefunden im Internet: URL:https://www.miele.de/pmedia/ZGA/TX2070 /10781120-000-02_10781120-02.pdf [gefunden am 2019-03-05]

## Beschreibung

### Technisches Gebiet

Die Erfindung bezieht sich auf ein Verfahren zum Erzeugen eines Kaffeegetränks in einem Kaffeeautomaten.

### Stand der Technik

Ein Kaffeeautomat gemäss dem Stand der Technik umfasst üblicherweise eine Brühvorrichtung mit einer Brühkammer zum Aufnehmen von Kaffeepulver, welche Brühkammer zumindest einen Fluid-Einlass und einen Fluid-Auslass umfasst, und ein Fluidsystem mit einer mit dem Fluid-Einlass verbundenen Fluid-Zufuhrleitung und einer Fluidfördereinrichtung zum Fördern eines erhitzten Fluids (beispielsweise Wasser und/oder Wasserdampf) durch die Fluid-Zufuhrleitung.

Ein Kaffeegetränk ist mit einem derartigen Kaffeeautomaten auf der Grundlage eines Verfahrens erzeugbar, welches in der Regel die folgenden Schritte aufweist:
- Einbringen einer vorbestimmten Menge Kaffeepulver in die Brühkammer,
- Fördern von erhitztem Fluid durch die Fluid-Zufuhrleitung in die Brühkammer zum Zubereiten eines Kaffeegetränks durch Brühen des Kaffeepulvers in der Brühkammer und Ausgeben eines zubereiteten Kaffeegetränks aus der Brühkammer durch den Fluid-Auslass.

Eine Brühvorrichtung der vorstehend genannten Art wird zum Erzeugen eines Kaffeegetränks zumeist mit einem Fluid in Form von Heisswasser bzw. Brühwasser gespeist, welches aus einem Wassertank kommend zunächst mit Hilfe von Pumpen- oder ähnlichen Einrichtungen durch einen Durchlauferhitzer geleitet und dort erhitzt wird. Weiterhin sind auch solche Brühvorrichtungen bekannt, bei welchen das Fluid in einem grösseren Tank zunächst komplett erhitzt und dann der Brüheinheit zugeleitet wird. In jedem Fall durchläuft das erhitzte Fluid nach dem Erhitzungsvorgang dann noch eine mehr oder weniger lange Leitungsstrecke, bis das Fluid den Fluid-Einlass der Brühkammer über die Fluid-Zufuhrleitung erreicht.

Hierbei ergibt sich insbesondere das Problem, dass die Leitungsstrecke, die zwischen der jeweiligen Heizeinrichtung zum Erhitzen des Fluids und dem Fluid-Einlass der Brühkammer liegt, je nach Art, Zeitpunkt und Häufigkeit vorausgegangener Brühvorgänge unterschiedliche Temperaturen aufweisen kann. Damit kann nicht vorausgesagt werden, welche Temperatur das Fluid am Eingang der Brühkammer tatsächlich aufweist und welche Temperatur das Kaffeegetränk aufweisen wird, welches durch Brühen von Kaffeepulver mit dem Fluid in der Brühkammer erzeugbar ist.

Hinsichtlich des Erzeugens eines (heissen) Kaffeegetränks gelten Brühtemperaturen im Bereich von 90 bis 95°C im Allgemeinen als ideal.

Wird ein Kaffeeautomat der vorstehend genannten Art nach dem Erzeugen eines ersten Kaffeegetränks erst nach einer längeren Wartezeit veranlasst, ein zweites Kaffeegetränk zu erzeugen, so kann während der Wartezeit die Brühvorrichtung und die Fluid-Zufuhrleitung auf eine niedrigere Temperatur abkühlen. In diesem Fall kann das zweite Kaffeegetränk unter Umständen eine niedrige Temperatur aufweisen als das erste Kaffeegetränk, zumal das Fluid, welches der Brühkammer zum Erzeugen des zweiten Kaffeegetränks durch die Fluid-Zufuhrleitung zugeführt werden muss, beim Durchströmen der Fluid-Zufuhrleitung und der Brühvorrichtung Wärme an die zuvor abgekühlte Fluid-Zufuhrleitung und die zuvor abgekühlte Brühvorrichtung abgeben muss, sodass dem Fluid beim Durchströmen der Fluid-Zufuhrleitung Wärme entzogen wird und die Temperatur des Fluids dabei verringert wird.

Eine derartige Verringerung der Temperatur des Fluids ist besonders deutlich spürbar, wenn das erzeugte Kaffeegetränk ein relativ kleines Volumen aufweist, beispielsweise weniger als 50 ml, was einem typischen Volumen von Kaffeegetränken wie Ristretto oder Espresso entspricht. Dementsprechend ist es bei einem Kaffeeautomaten der vorstehend genannten Art problematisch, eine kleine Menge eines Kaffeegetränks (z.B. Ristretto oder Espresso) mit einer vorgegebenen hohen Temperatur in ein Trinkgefäss auszugeben.

Dies ist insofern von Nachteil, als dass eine zu hohe Brühtemperatur vermehrt Bitterstoffe beispielsweise aus dem aufzubrühenden Kaffee extrahiert, wodurch der ausgegebene Kaffee bitter schmeckt. Andererseits ist eine zu niedrige Brühtemperatur ebenso wenig wünschenswert, da in diesem Fall die gewünschten Aromen nicht aus dem Kaffeepulver gelöst werden und das erzeugte Kaffeegetränk demnach eher fad schmeckt.

Zu diesem bekannten Problem sind aus dem Stand der Technik mehrere Lösungen bekannt, um die Temperatur des Fluids am Fluid-Einlass unter Berücksichtigung der Erstreckung der Fluid-Zufuhrleitung zwischen der Brühwasser-Erhitzungseinrichtung und dem Fluid-Einlass der Brühkammer bei Bedarf zu erhöhen.

Beispielsweise ist es möglich, die Temperatur des Fluids vor dem Erzeugen eines Kaffeegetränks geeignet zu erhöhen, um Wärmeverluste aufgrund des Abkühlens der Fluid-Zufuhrleitung und/oder der Brühvorrichtung während des Betriebs des Kaffeeautomaten zu kompensieren. Einer derartigen Temperaturerhöhung sind allerdings Grenzen gesetzt, um zu verhindern, dass der Kaffee in der Brühkammer nicht übermässig stark erhitzt wird und gegebenenfalls verbrüht wird bzw. im kochenden Zustand durch dem Fluid-Auslass in ein Trinkgefäss ausgegeben wird.

Aus der Veröffentlichung US 2008/0264264 A1 ist eine Vorrichtung zum Bereiten heisser Getränke durch Brühen geeigneter Produkte (z.B. Kaffee) in einer Brühkammer mittels heissem Wasser bekannt, welches mittels einer Heizeinrichtung bereitgestellt und über eine Leitung der Brühkammer zugeführt werden kann. Hinsichtlich der Bereitstellung des heissen Wasser besteht das Problem, dass die Temperatur des Wassers auf dem Weg von der Heizrichtung zur Brühkammer abnehmen kann und dass diese Abnahme der Temperatur von Parametern abhängt, welche sich zufällig verändern können. Zur Lösung dieses Problems ist eine Kompensationsvorrichtung implementiert, welche die Temperatur-Abnahme des Wassers in der Leitung zwischen der Heizeinrichtung und der Brühkammer dynamisch kompensiert. Zur Kompensation der Temperatur-Abnahme des Wassers in der Leitung wird die Temperatur des Wassers in der Heizeinrichtung mittels einer Steuerrichtung gesteuert, sodass die Temperatur des Wassers in der Brühkammer in einem vorgegebenen Bereich liegt. Die Implementierung einer derartigen Steuerung der Temperatur des Wassers ist in der Regel aufwändig und entsprechend kostspielig.

Aus der Veröffentlichung DE 699 11 675 T2 ist eine Anordnung bekannt, bei welcher eine Brühvorrichtung - in diesem Fall die Brühvorrichtung einer Kaffeemaschine zum Bereiten von Espresso - aus einer Betriebsstellung in eine Ruhestellung schwenkbar ist. Nach dem Schwenken in die Ruhestellung liegt ein wärmeübertragender Bereich der Brühvorrichtung an einem Heizelement an, mit welchem die Brühvorrichtung aufheizbar ist. Während eines nachfolgenden Brühvorgangs wird die so (in der Ruhestellung) erwärmte Brühvorrichtung wieder in ihre Betriebsposition zurück geschwenkt, und kann somit eine ggf. zu niedrige Temperatur des der Brühvorrichtung zugeführten Brühwassers kompensieren. Das erwärmte Brühwasser wird im vorliegenden Fall unter Druck in eine Brühkammer der Brühvorrichtung eingeleitet, sodass in der Brühkammer gebrühter Kaffee in Form von Espresso herstellbar ist, wobei der gebrühte Kaffee über ein Rohr aus der Brühkammer abfliessen und aus der Kaffeemaschine abgegeben werden kann. Die Implementierung des Heizelements führt zu einem erhöhten Platzbedarf und ist ebenfalls aufwändig und entsprechend kostspielig.

Die Veröffentlichung US 2013/0337132 A1 offenbart eine Getränkebereitungsmaschine zum Herstellen eines heissen Getränks in einer Brühkammer durch Aufgiessen einer Portion heissen Wassers auf Getränkefeststoffe (z.B. Kaffeepulver), welche in die Brühkammer eingebracht sind. Diese Getränkebereitungsmaschine umfasst eine Heizeinrichtung zum Erzeugen eines erhitzen Fluids in Form von erhitztem flüssigen Wasser oder Wasserdampf und eine Fluidfördereinrichtung zum Zuführen (bzw. Fördern) des erhitzten Fluids von der Heizeinrichtung durch eine Fluid-Zufuhrleitung auf die in die Brühkammer eingebrachten Getränkefeststoffe. Die Getränkebereitungsmaschine ist ausgebildet, während eines Betriebs der Getränkebereitungsmaschine in einer ersten Betriebsphase erhitztes Wasser im flüssigen Zustand durch die Fluid-Zufuhrleitung auf die in die Brühkammer eingebrachten Getränkefeststoffe zu leiten, um das Herstellen eines Getränks durch Brühen der Getränkefeststoffe mit dem erhitzten Wasser zu ermöglichen, und in einer zweiten (in US 2013/0337132 A1 sinngemäss als "Dampfspülen" bezeichneten) Betriebsphase Wasserdampf durch die Fluid-Zufuhrleitung auf die in die Brühkammer eingebrachten Getränkefeststoffe zu leiten. Das Zuführen von Wasserdampf auf die in die Brühkammer eingebrachten Getränkefeststoffe kann nach einem in der ersten Betriebsphase erfolgten Zuführen von erhitzten Wasser in die Brühkammer erfolgen, um durch das Zuführen von Wasserdampf eine Reduktion eines von dem erhitzen Wasser in der Brühkammer erzeugten Wasserdrucks zu veranlassen. Alternativ kann das Zuführen von Wasserdampf auf die in die Brühkammer eingebrachten Getränkefeststoffe auch vor einem in der ersten Betriebsphase erfolgenden Zuführen von erhitztem Wasser in die Brühkammer veranlasst werden, um durch das Zuführen von Wasserdampf ein Trocknen oder Vorwärmen der vom Wasserdampf durchströmten Bereiche der Getränkebereitungsmaschine zu ermöglichen.

### Zusammenfassung der Erfindung

Der vorliegenden Erfindung liegt die Aufgabe zugrunde, die genannten Nachteile zu vermeiden und ein Verfahren zum Erzeugen eines Kaffeegetränks in einem Kaffeeautomaten zu schaffen, welches es ermöglicht, mit einfachen Mitteln ein heisses Kaffeegetränk zu erzeugen und die Temperatur des erzeugten Kaffeegetränks zu kontrollieren.

Diese Aufgabe wird gelöst durch ein Verfahren mit den Merkmalen des Patentanspruchs 1.

Dieses Verfahren zum Erzeugen eines Kaffeegetränks ist durchführbar mit einem Kaffeeautomaten, welcher aufweist: eine Brühvorrichtung mit einer Brühkammer zum Aufnehmen von Kaffeepulver, welche Brühkammer zumindest einen Fluid-Einlass und einen Fluid-Auslass umfasst, und ein Fluidsystem mit einer mit dem Fluid-Einlass verbundenen Fluid-Zufuhrleitung und einer Fluidfördereinrichtung zum Fördern eines erhitzten Fluids durch die Fluid-Zufuhrleitung und mit einem von dem Fluid-Auslass separaten Drainage-Ausgang, welcher Drainage-Ausgang mit der Brühkammer und/oder der Fluid-Zufuhrleitung in eine Fluidverbindung bringbar ist oder in einer Fluidverbindung steht, sodass ein Restfluid aus der Fluid-Zufuhrleitung und/oder der Brühkammer durch den Drainage-Ausgang ausgebbar ist. Hierbei umfasst die Brühvorrichtung: einen Brühzylinder mit einem eine Längsachse aufweisenden Innenraum, welcher an einer Stirnseite durch eine sich quer zur Längsachse erstreckende Stirnfläche und radial zur Längsachse durch eine sich um die Längsachse erstreckende Seitenwand begrenzt ist; einen Brühkolben, welcher sich in Richtung der Längsachse erstreckt, sodass eine Stirnfläche) des Brühkolbens der Stirnfläche des Innenraums gegenüberliegend angeordnet ist, wobei die Brühkammer sich zwischen der Stirnfläche des Innenraums, der Stirnfläche des Brühkolbens und der Seitenwand erstreckt und der Brühkolben entlang der Längsachse bewegbar ist, sodass ein Abstand zwischen der Stirnfläche des Innenraums und dem

Brühkolben veränderbar ist.

Das Verfahren weist dabei die folgenden Schritte (a)-(d) auf:
(a) Einbringen einer vorbestimmten Menge Kaffeepulver in die Brühkammer,
(b) Fördern von erhitztem Fluid durch die Fluid-Zufuhrleitung in die Brühkammer zum Zubereiten eines Kaffeegetränks durch Brühen des Kaffeepulvers in der Brühkammer und Ausgeben eines zubereiteten Kaffeegetränks aus der Brühkammer durch den Fluid-Auslass,
(c) Zuführen einer ersten Menge erhitzten Fluids durch die Fluid-Zufuhrleitung in die Brühkammer, wobei der Schritt (c) vor dem Schritt (a) ausgeführt wird.
(d) Ausgeben zumindest eines Teils der im Schritt (c) zugeführten ersten Menge erhitzten Fluids aus der Brühkammer vor Beginn des Schritts (a),
wobei im Schritt (d) der zumindest eine Teil der im Schritt (c) zugeführten ersten Menge erhitzten Fluids durch den Drainage-Ausgang ausgegeben wird.

Gemäss der Erfindung umfasst das Verfahren die folgenden Schritte (f) und (g):
(f) vor Beginn oder während Schritt (c) wird der Brühkolben derart angeordnet, dass der Brühkolben einen ersten vorgegebenen Abstand relativ zur Stirnfläche des Innenraums aufweist;
(g) während Schritt (d) wird der Brühkolben entlang der Längsachse bewegt, sodass der Brühkolben relativ zur Stirnfläche des Innenraums einen Abstand aufweist, welcher kleiner als der erste vorgegebene Abstand (D2) ist.

Demnach wird vor dem Zubereiten eines heissen Kaffeegetränks (d.h. bevor zum Zwecke des Zubereitens des Kaffeegetränks Kaffeepulver in die Brühkammer eingebracht und erhitztes Fluid zum Brühen des Kaffeepulvers durch die Fluid-Zufuhrleitung in die Brühkammer gefördert wird) im Schritt (c) zunächst eine erste Menge erhitzten Fluids (z.B. Wasser oder Wasserdampf) durch die Fluid-Zufuhrleitung in die Brühkammer gefördert. Sollte die Fluid-Zufuhrleitung und/oder die Brühvorrichtung eine Temperatur aufweisen, welche geringer ist als die Temperatur des erhitzten Fluids, dann würde während des Schritts (c) Wärme auf die Fluid-Zufuhrleitung und/oder die Brühvorrichtung übertragen, sodass die Fluid-Zufuhrleitung und/oder die Brühvorrichtung aufgeheizt werden und die Temperatur der Fluid-Zufuhrleitung und/oder die Temperatur der Brühvorrichtung erhöht wird, insbesondere in jenen Bereichen der Fluid-Zufuhrleitung und/oder der Brühvorrichtung, welche mit dem erhitzen Fluid während Schritt (c) direkt in Kontakt sind. Auf diese Weise ist es möglich, die Fluid-Zufuhrleitung und/oder der Brühvorrichtung vorzuheizen, bevor zum Zwecke des Zubereitens des Kaffeegetränks Kaffeepulver in die Brühkammer eingebracht wird und erhitztes Fluid zum Brühen des Kaffeepulvers durch die Fluid-Zufuhrleitung in die Brühkammer gefördert wird.

Auf diese Weise ist es insbesondere möglich, während des Schritts (c) die Fluid-Zufuhrleitung und die Brühvorrichtung bzw. die Brühkammer in denjenigen Bereichen vorzuheizen, welche während des Schritts (b) zum Zwecke des Brühens des Kaffeepulvers mit erhitzten Fluid in Kontakt geraten. Dieses Vorheizen ist dementsprechend effizient im Hinblick auf eine Kontrolle der Temperatur des erhitzten Fluids, welches während Schritt (b) in die Brühkammer gefördert wird.

Durch das Zuführen des erhitzen Fluids während des Schritts (c) ist es insbesondere möglich, Wärmeverluste zu kompensieren, welche während des Betriebs des Kaffeeautomaten möglicherweise vor dem Erzeugen eines Kaffeegetränks gemäss den Schritten (a) und (b) aufgetreten sind, z.B. wenn der Kaffeeautomat vor dem Erzeugen eines Kaffeegetränks gemäss den Schritten (a) und (b) während einer längeren Wartezeit nicht veranlasst worden war, ein Kaffeegetränk in der Brühkammer zu erzeugen und die Fluid-Zufuhrleitung und/oder der Brühvorrichtung während dieser Wartezeit abgekühlt sind.

Durch das vorstehend genannte Vorheizen der Fluid-Zufuhrleitung und/oder der Brühvorrichtung wird ermöglicht, dass das in den Schritten (a) und (b) erzeugte Kaffeegetränk eine höhere Temperatur aufweist im Vergleich zu der Temperatur, welche erzielt würde, wenn auf den Schritt (c) verzichtet würde. Insbesondere ist es hierbei möglich, durch Zuführen erhitzten Fluids während Schritt (c) die Fluid-Zufuhrleitung und/oder die Brühvorrichtung auf eine vorgegebene Temperatur aufzuheizen. Auf diese Weise ist es möglich, die Temperatur des erzeugten Kaffeegetränks zu kontrollieren, sodass die Temperatur des erzeugten Kaffeegetränks in einem vorgegebenen Bereich liegt.

Das Verfahren hat den Vorteil, dass es auf einfache Weise mit den technischen Mitteln realisierbar sind, welche gewöhnlich in einem konventionellen Kaffeeautomaten der vorstehend genannten Art vorhanden sind und zumindest das Zuführen eines erhitzen Fluids in eine Brühkammer ermöglichen. Zur Realisierung des Verfahrens ist es lediglich erforderlich, die Förderung des erhitzten Fluids durch die Fluid-Zufuhrleitung in die Brühkammer als Funktion der Zeit geeignet zu steuern.

Dadurch, dass zumindest ein Teil der im Schritt (c) zugeführten ersten Menge erhitzten Fluids im Schritt (d) aus der Brühkammer ausgegeben wird, kann die Brühkammer vor dem Einbringen von Kaffeepulver in die Brühkammer zunächst mithilfe der im Schritt (c) zugeführten ersten Menge erhitzten Fluids gereinigt werden. Beispielsweise kann die Brühkammer hierbei von einem Rückstand eines Kaffeegetränks befreit werden, welches an einem früheren Zeitpunkt zubereitet wurde und von dem gegebenenfalls ein kleiner Rest in der Brühkammer als ein an einer Wand der Brühkammer haftender Rückstand geblieben sein kann.

Dadurch, dass zumindest ein Teil der im Schritt (c) zugeführten ersten Menge erhitzten Fluids aus der Brühkammer ausgegeben wird, wird ausserdem erreicht, dass das Volumen der ersten Menge erhitzten Fluids, welches im Schritt (c) in die Brühkammer gefördert wird, relativ gross sein kann (z.B. so gross, dass die Brühkammer teilweise oder ganz mit dem erhitzten Fluid gefüllt wird). Dadurch, dass im Schritt (d) zumindest ein Teil der im Schritt (c) zugeführten ersten Menge erhitzten Fluids aus der Brühkammer ausgegeben wird, wird gewährleistet, dass während Schritt (a) zumindest ein hinreichend grosser Bereich der Brühkammer für eine Aufnahme von trockenem Kaffeepulver zur Verfügung steht. Weiterhin kann erreicht werden, dass das Kaffeepulver in der Brühkammer im Wesentlichen während Schritt (b) und nicht während Schritt (a) mit erhitztem Fluid gebrüht wird.

Dadurch, dass der Drainage-Ausgang separat von dem Fluid-Auslass ausgebildet ist und ausserdem mit der Brühkammer und/oder der Fluid-Zufuhrleitung in eine Fluidverbindung bringbar ist oder in einer Fluidverbindung steht, sodass ein Restfluid aus der Fluid-Zufuhrleitung und/oder der Brühkammer durch den Drainage-Ausgang ausgebbar ist, wird erreicht, dass im Schritt (d) das im Schritt (c) zugeführte erhitzte Fluid die Brühkammer nicht durch den Fluid-Auslass verlassen muss. Der Fluid-Auslass ist deshalb dafür bestimmt, dass ein im Schritt (b) in der Brühkammer zubereitetes Kaffeegetränk die Brühkammer durch den Fluid-Auslass verlassen kann, beispielsweise in ein Trinkgefäss, welches ein Benutzer des Kaffeeautomaten in der Regel unter dem Fluid-Auslass platziert, bevor der Benutzer den Kaffeeautomaten veranlasst, ein Kaffeegetränk zuzubereiten und durch den Fluid-Auslass in das Trinkgefäss auszugeben. Dadurch, dass im Schritt (d) das im Schritt (c) zugeführte erhitzte Fluid durch den Drainage-Ausgang und nicht durch den Fluid-Auslass ausgegeben wird, wird vorteilhafterweise erreicht, dass die Schritte (c) und (d) zu beliebigen Zeitpunkten durchgeführt werden können, und zwar unabhängig davon, ob ein Benutzer des Kaffeeautomaten ein Trinkgefäss unter dem Fluid-Auslass platziert hat oder nicht. Auf diese Weise wird auf jeden Fall verhindert, dass erhitztes Fluid, welches im Schritt (c) zum Zwecke des Vorwärmens in die Brühkammer geleitet wird, während Schritt (d) die Brühkammer durch den Fluid-Auslass verlassen und unerwünschter Weise in ein Trinkgefäss gelangen kann, welches von einem Benutzer gegebenenfalls (in der Erwartung, dass der Kaffeeautomat ein Kaffeegetränk durch den Fluid-Auslass ausgeben wird) unter dem Fluid-Auslass platziert wurde.

Im vorliegenden Fall bestimmt die Position der Stirnfläche des Brühkolbens relativ zur Stirnfläche des Innenraums des Brühzylinders das Volumen der Brühkammer. Dadurch, dass der Brühkolben entlang der Längsachse bewegbar ist, sodass ein Abstand zwischen der Stirnfläche des Innenraums und dem Brühkolben veränderbar ist, ist gewährleistet, dass das Volumen der Brühkammer veränderbar ist. Während Schritt (a) kann beispielsweise eine vorgegebene Menge Kaffeepulver in den Innenraum des Brühzylinder eingebracht werden und anschliessend der Brühkolben im Innenraum des Brühzylinders relativ zur Stirnfläche des Innenraums so positioniert werden, dass das Kaffeepulver in der Brühkammer (d.h. zwischen der Stirnfläche des Innenraums, der Seitenwand des Innenraums und der Stirnfläche des Brühkolbens) derart angeordnet ist, dass das Kaffeepulver die Brühkammer vollständig ausfüllt. Der Brühkolben kann hierbei nach dem Einbringen des Kaffeepulvers in den Innenraum des Brühzylinders derart nah an die Stirnfläche des Innenraums heranbewegt werden, dass das Kaffeepulver in der Brühkammer zwischen der Stirnfläche des Innenraums und der Stirnfläche des Brühkolbens zusammengedrückt wird, um zu erreichen, dass das Kaffeepulver in der Brühkammer eine möglichst kompakte Masse mit einer hohen Dichte bildet.

Mittels Schritt (f), d.h. dadurch, dass vor Beginn oder während Schritt (c) der Brühkolben derart angeordnet wird, dass der Brühkolben einen ersten vorgegebenen Abstand relativ zur Stirnfläche des Innenraums aufweist, wird erreicht, dass das Volumen der Brühkammer derart gross ist, dass die Brühkammer mit der in Schritt (c) zugeführten ersten Menge erhitzten Fluids ganz oder zumindest teilweise gefüllt werden kann. Wird die Brühkammer im Schritt (c) vollständig mit dem erhitzten Fluid gefüllt, dann ist gewährleistet, dass der Brühkolben im Schritt (c) mit dem erhitzten Fluid in Kontakt gebracht wird, sodass der Brühkolben hierbei auf effiziente Weise vorgeheizt wird.

Mittels Schritt (g), d.h. dadurch, dass während Schritt (d) der Brühkolben entlang der Längsachse bewegt wird, sodass der Brühkolben relativ zur Stirnfläche des Innenraums einen Abstand aufweist, welcher kleiner als der erste vorgegebene Abstand ist, wird erreicht, dass der Brühkolben in Richtung auf die Stirnfläche des Innenraums bewegt und hierbei das Volumen der Brühkammer reduziert wird. Die erste Menge erhitzten Fluids, welche im Schritt (c) in die Brühkammer gefördert wurde, wird demensprechend im Schritt (g) durch die Bewegung des Brühkolbens in Richtung auf die Stirnfläche des Innenraums durch den Fluid-Einlass der Brühkammer ganz oder teilweise wieder aus der Brühkammer verdrängt. Das während Schritt (g) aus der Brühkammer verdrängte Fluid wird durch den Drainage-Ausgang ausgegeben, beispielsweise in einen Restfluid-Behälter.

Zum Optimieren des vorstehend beschriebenen Vorheizens der Fluid-Zufuhrleitung und der Brühvorrichtung bzw. der Brühkammer kann der Schritt (c) auf verschiedene Weisen durchgeführt oder mit verschiedenen Massnahmen kombiniert werden.

In einer Ausführungsform des Verfahrens wird der Schritt (c) in einem vorgegebenen ersten Zeitintervall vor Beginn des Schritts (a) ausgeführt. Das Zuführen der ersten Menge erhitzten Fluids durch die Fluid-Zufuhrleitung in die Brühkammer erfolgt hierbei zeitlich korreliert mit dem Erzeugen eines Kaffeegetränks, d.h. das Zuführen der ersten Menge erhitzten Fluids beginnt mit einem vorgegebenen zeitlichen Abstand vor dem Einbringen des Kaffeepulvers in die Brühkammer. Dies hat den Vorteil, dass die jeweiligen Temperaturen, welche die Fluid-Zufuhrleitung und/oder die Brühvorrichtung bzw. die Brühkammer während des Zubereitens eines Kaffeegetränks während der Schritte (a) und (b) aufweisen, auf einfache Weise kontrollierbar sind, beispielsweise durch eine geeignete Vorgabe der Dauer des ersten Zeitintervalls, der Temperatur des erhitzten Fluids während Schritt (c) und des Volumens der ersten Menge erhitzten Fluids.

Der Kaffeeautomat kann weiterhin einen Restfluid-Behälter zum Aufnehmen eines aus dem Drainage-Ausgang ausgegebenen Restfluids umfassen. In diesem Fall kann das Verfahren vorteilhafterweise derart ausgeführt werden, dass im Schritt (d) der zumindest eine Teil der im Schritt (c) zugeführten ersten Menge erhitzten Fluids in den Restfluid-Behälter ausgegeben wird.

Andere Weiterbildungen der vorstehend genannten Ausführungsform des Verfahrens sind derart konzipiert, dass der Schritt (d) in einem vorgegebenen zweiten Zeitintervall vor Beginn des Schritts (a) ausgeführt wird. Dadurch wird erreicht, dass das Ausgeben zumindest eines Teils der im Schritt (c) zugeführten ersten Menge erhitzten Fluids aus der Brühkammer zeitlich korreliert mit dem Beginn des Schritts (a) erfolgt. Diese Massnahme dient dazu, die jeweiligen Temperaturen, welche die Brühvorrichtung bzw. die Brühkammer während des Zubereitens eines Kaffeegetränks während der Schritte (a) und (b) aufweisen, mit einer grossen Genauigkeit zu kontrollieren.

Hierbei kann beispielsweise das Zuführen der ersten Menge erhitzten Fluids gemäss Schritt (c) an einem ersten Endzeitpunkt beendet werden und der Beginn des zweiten Zeitintervalls mit einer vorgegebenen ersten Zeitdifferenz auf den ersten Endzeitpunkt folgen. Diese erste Zeitdifferenz definiert, wie lange die im Schritt (c) zugeführte erste Menge erhitzten Fluids in der Brühkammer verbleibt, bevor gemäss Schritt (d) der zumindest eine Teil der im Schritt (c) zugeführten ersten Menge erhitzten Fluids aus der Brühkammer ausgegeben wird. Die erste Zeitdifferenz hat somit einen Einfluss auf die Dauer des Zeitraums, in welchem die Brühvorrichtung durch das erhitze Fluid, welches im Schritt (c) in die Brühkammer gefördert wird, vorgeheizt wird. Eine Vorgabe der ersten Zeitdifferenz hat somit einen Einfluss auf die Temperatur, welche die Brühvorrichtung bzw. die Brühkammer während des Zubereitens eines Kaffeegetränks gemäss den Schritten (a) und (b) aufweist. Eine geeignete Vorgabe der ersten Zeitdifferenz ermöglicht somit eine Kontrolle der Temperatur, welche die Brühvorrichtung bzw. die Brühkammer während des Zubereitens eines Kaffeegetränks gemäss den Schritten (a) und (b) aufweist.

Um einen benutzerfreundlichen Betrieb des Kaffeeautomaten zu ermöglichen, ist es beispielsweise zweckmässig, die erste Zeitdifferenz so zu wählen, dass die erste Zeitdifferenz im Bereich von 0 bis 10 Sekunden liegt.

Eine andere Ausführungsform des Verfahrens setzt voraus, dass der Kaffeeautomat einen Drainage-Ausgang umfasst, welcher mit der Brühkammer und/oder der Fluid-Zufuhrleitung in eine Fluidverbindung bringbar ist oder in einer Fluidverbindung steht und ausgebildet ist, ein Restfluid aus der Fluid-Zufuhrleitung und/oder der Brühkammer auszugeben. Diese Ausführungsform des Verfahrens umfasst den folgenden Schritt (e):
(e) Fördern einer zweiten Menge erhitzten Fluids durch die Fluid-Zufuhrleitung und Ausgeben der zweiten Menge erhitzten Fluids durch den Drainage-Ausgang,
wobei Schritt (e) vor Schritt (c) ausgeführt wird. Dadurch, dass im Schritt (e) zunächst eine zweite Menge erhitzten Fluids durch die Fluid-Zufuhrleitung gefördert und durch den Drainage-Ausgang ausgegeben wird, bevor erhitztes Fluid im Schritt (c) in die Brühkammer zugeführt wird, wird erreicht, dass die Fluid-Zufuhrleitung während Schritt (e) während eines bestimmten Zeitraums von erhitztem Fluid durchströmt wird und demzufolge eine Temperatur annehmen kann, welche der Temperatur des erhitzten Fluids entspricht. Wenn in Anschluss an Schritt (e) schliesslich im Schritt (c) erhitztes Fluid in die Brühkammer gefördert wird, ist unter den vorstehend genannten Umständen gewährleistet, dass das während Schritt (c) durch die Fluid-Zufuhrleitung geförderte erhitzte Fluid auf seinem Weg in die Brühkammer relativ wenig Wärme an die Fluid-Zufuhrleitung abgibt und somit die Brühkammer mit einem relativ geringem Wärmeverlust erreicht. Auf diese Weise ist gewährleistet, dass die erste Menge erhitzten Fluids, welche im Schritt (c) durch die Fluid-Zufuhrleitung in die Brühkammer gefördert wird, am Fluid-Einlass der Brühkammer eine besonders hohe Temperatur aufweist und somit ein besonders effizientes Vorheizen der Brühkammer ermöglicht.

Eine Weiterbildung der vorstehend genannten Ausführungsform des Verfahrens kann vorteilhaft durchgeführt werden mit einem Kaffeeautomaten, welcher einen Restfluid-Behälter zum Aufnehmen eines aus dem Drainage-Ausgang ausgegebenen Restfluids umfasst. In diesem Fall kann im Schritt (e) die zweite Menge erhitzten Fluids in den Restfluid-Behälter ausgegeben werden.

Das Verfahren kann zweckmässigerweise derart implementiert werden, dass das erhitzte Fluid (z.B. Wasser oder Dampf) beim Zuführen gemäss Schritt (c) eine Temperatur aufweist, welche im Bereich von 75-115°C liegt. Entsprechend kann das erhitzte Fluid beim Fördern gemäss Schritt (e) eine Temperatur aufweisen, welche im Bereich von 75-115°C liegt.

Das Verfahren kann insbesondere derart implementiert werden, dass die erste Menge erhitzten Fluids ein Volumen aufweist, welches derart gross ist, dass während Schritt (c) die Brühkammer ganz oder teilweise mit erhitztem Fluid gefüllt wird. Auf diese Weise ist gewährleistet, dass wesentliche Bereiche der Brühkammer, welche im Schritt (a) in Kontakt mit Kaffeepulver und in Schritt (b) in Kontakt mit erhitztem Fluid kommen, bereits in Schritt (c) mit erhitzten Fluid vorgeheizt und somit auf eine erhöhte Temperatur gebracht werden können. Eine Weiterentwicklung der vorstehenden Ausführungsform des Verfahrens ist dadurch charakterisiert, dass das Verfahren den folgenden Schritt (h) umfasst:
(h) vor Beginn oder während Schritt (e) wird der Brühkolben derart angeordnet, dass der Brühkolben relativ zur Stirnfläche des Innenraums einen Abstand aufweist, welcher gleich einem vorgegebenen Minimalwert ist.

Hierdurch wird erreicht, dass vor Beginn oder während Schritt (e) das Volumen der Brühkammer derart reduziert wird, dass das Volumen der Brühkammer möglichst klein wird. Der vorgegebene Minimalwert kann beispielsweise gleich 0 sein, wobei in diesem Fall das Volumen der Brühkammer auf 0 reduziert wird. Falls unter diesen Umständen im Schritt (e) eine zweite Menge erhitzten Fluids durch die Fluid-Zufuhrleitung gefördert und durch den Drainage-Ausgang ausgegeben wird, so kann von dieser zweiten Menge erhitzten Fluids im Schritt (e) entweder nur ein geringer Anteil in die Brühkammer strömen (falls der Brühkolben so angeordnet ist, dass das Volumen der Brühkammer grösser Null ist) oder die zweite Menge erhitzten Fluids wird durch die Fluid-Zufuhrleitung gefördert und durch den Drainage-Ausgang ausgeben, ohne dass ein Teil der zweiten Menge erhitzten Fluids in die Brühkammer fliessen kann (falls der Brühkolben so angeordnet ist, dass das Volumen der Brühkammer den Wert 0 hat). Auf diese Weise wird erreicht, dass im Schritt (e) die Fluid-Zufuhrleitung besonders effizient durch die zweite Menge erhitzten Fluids aufgeheizt werden kann, wobei das erhitzte Fluid hauptsächlich oder sogar ausschliesslich zum Heizen der Fluid-Zufuhrleitung zur Verfügung steht.

### Kurze Beschreibung der Zeichnungen

Weitere Einzelheiten der Erfindung und insbesondere beispielhafte Ausführungsformen des erfindungsgemässen Verfahrens werden im Folgenden anhand der beigefügten Zeichnungen erläutert. Es zeigen:
- Fig. 1: eine schematische Darstellung eines Kaffeeautomaten in einem Zustand, welcher zur Durchführung eines Schritts einer Ausführungsform des erfindungsgemässen Verfahrens geeignet ist;
- Fig. 2: den Kaffeeautomaten gemäss Fig. 1 in einem Zustand, welcher zur Durchführung eines anderen Schritts des erfindungsgemässen Verfahrens geeignet ist;
- Fig. 3: den Kaffeeautomaten gemäss Fig. 1 in einem Zustand, welcher zur Durchführung eines weiteren Schritts des erfindungsgemässen Verfahrens geeignet ist.

### Beschreibung von Ausführungsformen

Für dieselben Elemente in den Figuren sind jeweils dieselben Bezugszeichen verwendet, wenn nichts anderes erwähnt ist.

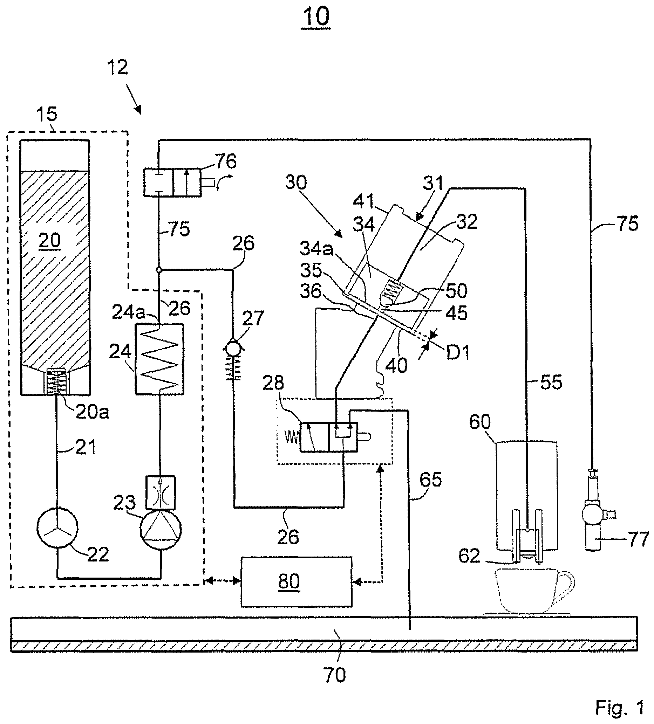

Die Fig. 1-3 zeigen einen Kaffeeautomaten 10 in verschiedenen Betriebszuständen, welche verschiedenen Schritten eines erfindungsgemässen Verfahrens zum Erzeugen eines Kaffeegetränks entsprechen.

Wie ersichtlich, weist der Kaffeeautomat 10 auf: eine Brühvorrichtung 30 mit einer Brühkammer 35 zum Aufnehmen von Kaffeepulver, welche Brühkammer 35 zumindest einen Fluid-Einlass 36 und einen Fluid-Auslass 45 umfasst; ein Fluidsystem 12 mit einer mit dem Fluid-Einlass 36 verbundenen Fluid-Zufuhrleitung 26 und einer Fluidfördereinrichtung 15 zum Fördern eines erhitzten Fluids durch die Fluid-Zufuhrleitung 26.

Im vorliegenden Beispiel ist der Kaffeeautomat 10 derart ausgebildet, dass die Brühvorrichtung 30 einen Brühzylinder 31 mit einem eine Längsachse LA aufweisenden (zylindrischen) Innenraum 32 und einen im Innenraum 32 des Brühzylinders 31 angeordneten Brühkolben 34 umfasst. Der Innenraum 32 bzw. der Brühzylinder 31 ist derart geformt, dass er an einer Stirnseite durch eine sich quer zur Längsachse LA erstreckende Stirnfläche 40 und radial zur Längsachse LA durch eine sich um die Längsachse LA erstreckende Seitenwand 41 begrenzt ist. Der Brühkolben 34 erstreckt sich in Richtung der Längsachse LA derart, dass eine Stirnfläche 34a des Brühkolbens 34 der Stirnfläche 40 gegenüberliegend angeordnet ist. Die Brühkammer 35 ist im vorliegenden Beispiel ein Abschnitt des Innenraums 32 des Brühzylinders 31: Die Brühkammer 35 erstreckt sich zwischen der Stirnfläche 40 des Innenraums 32 (bzw. des Brühzylinders 31), der Stirnfläche 34a des Brühkolbens 34 und der Seitenwand 41 des Innenraums 32. Der Brühkolben 34 ist derart geformt, dass eine Querschnittsfläche des Brühkolbens 34 bezüglich einer Ebene senkrecht zur Längsachse LA im Wesentlichen mit einer entsprechenden Querschnittsfläche des Innenraums 32 des Brühzylinders 31 übereinstimmt, sodass der Brühkolben 32 entlang einer sich um die Längsachse LA erstreckenden Umfangslinie an die Seitenwand 41 des Innenraums 32 grenzt.

Der Brühkolben 34 ist entlang der Längsachse LA bewegbar, sodass ein Abstand zwischen der Stirnfläche 40 und der Stirnfläche 34a des Brühkolbens 34 veränderbar ist. Eine Veränderung des Abstands zwischen der Stirnfläche 40 und der Stirnfläche 34a des Brühkolbens 34 korrespondiert im vorliegenden Fall mit einer Veränderung des Volumens der Brühkammer 35.

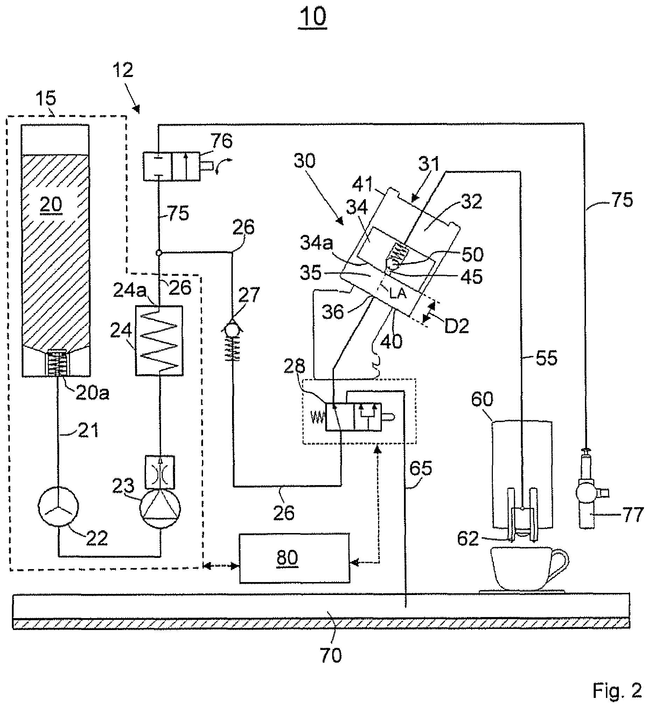

In den Fig. 1-3 ist die Brühvorrichtung 30 jeweils derart dargestellt, dass der Brühkolben 34 innerhalb des Innenraums 32 des Brühzylinders 31 angeordnet ist, wobei der Brühkolben 34 gemäss Fig. 1-3 in unterschiedlichen Abständen relativ zur Stirnfläche 40 angeordnet sein kann: In Fig. 1 bzw. Fig. 2 ist der Abstand zwischen der Stirnfläche 40 und der Stirnfläche 34a des Brühkolbens 34 mit D1 bzw. D2 angegeben, wobei D2 grösser als D1 ist. Es sei jedoch darauf hingewiesen, dass der Brühkolben 34 entlang der Längsachse LA derart weit von der Stirnfläche 40 des Innenraums 32 (bzw. des Brühzylinders 31) entfernt werden kann, dass der Brühkolben 34 in einen Raumbereich in der Peripherie der Brühvorrichtung 30 bewegt werden kann, sodass sich der Brühkolben 34 vollständig ausserhalb des Innenraums 32 befindet.

Um im Falle der Brühvorrichtung 30 Kaffeepulver in die Brühkammer 35 einbringen zu können, wird der Brühkolben 34 entlang der Längsachse LA von der Stirnfläche 40 des Innenraums 32 (bzw. des Brühzylinders 31) entfernt, bis sich der Brühkolben 34 vollständig ausserhalb des Innenraums 32 befindet. In diesem Fall ragt der Brühkolben 34 (im Gegensatz zu den in Fig. 1-3 dargestellten Situationen) nicht in den Innenraum 32 hinein, sodass der Innenraum 32 zu einer der Stirnfläche 40 gegenüberliegenden Seite hin offen ist und von dieser der Stirnfläche 40 gegenüberliegenden Seite des Innenraums 32 her frei zugänglich ist. Unter diesen Umständen besteht die Möglichkeit, eine vorgegebene Menge Kaffeepulver von der der Stirnfläche 40 gegenüberliegenden Seite des Innenraums 32 her in den Innenraum 32 (mithilfe einer hierfür geeigneten, in den Figuren nicht dargestellten Vorrichtung) einzubringen, sodass das derart in den Innenraum 32 eingebrachte Kaffeepulver auf der Stirnfläche 40 des Innenraums 32 (bzw. des Brühzylinders 31) aufgehäuft wird und schliesslich eine die Stirnfläche 40 bedeckende Schicht bildet. Anschliessend kann der Brühkolben 34 entlang der Längsachse LA in Richtung auf die Stirnfläche 40 bewegt werden, um den Brühkolben 34 wieder in den Innenraum 32 einzuführen, sodass das Kaffeepulver in einem von der Stirnfläche 40, der Seitenwand 41 und der Stirnfläche 34a des Brühkolbens 34 begrenzten Raum eingeschlossen ist und diesen Raum vollständig füllt. Dieser von der Stirnfläche 40, der Seitenwand 41 und der Stirnfläche 34a des Brühkolbens 34 begrenzte, mit Kaffeepulver gefüllte Raum ist hierbei eine Realisierung der Brühkammer 35 gemäss Fig. 1-3.

Das Einbringen von Kaffeepulver in die Brühkammer 35 ist mithilfe von Mitteln realisierbar, welche zum Stand der Technik gehören und dementsprechend an dieser Stelle nicht im Detail beschrieben werden sollen. Um das Einbringen von Kaffeepulver in die Brühkammer 35 zu erleichtern, ist es beispielsweise möglich, den Brühzylinder 31 derart beweglich anzuordnen, dass der Brühzylinder 31, sobald der Brühkolben 34 in Richtung der Längsachse LA bewegt wurde, bis sich der Brühkolben 34 vollständig ausserhalb des Innenraums 32 befindet, relativ zum Brühkolben 34 bewegt werden kann, um den Brühzylinder 31 in eine andere räumliche Lage zu bringen, in welcher der Innenraum 32 des Brühzylinders 31 auf eine besonders einfache Weise frei zugänglich ist, um Kaffeepulver von der der Stirnfläche 40 gegenüberliegenden Seite des Innenraums 32 her in den Innenraum 32 einzubringen. Zu diesem Zweck kann der Brühzylinder 31 beispielweise derart angeordnet sein, dass der Brühzylinder 31 um eine Drehachse schwenkbar ist, sobald sich der Brühkolben 34 vollständig ausserhalb des Innenraums 32 befindet. In diesem Fall kann der Brühzylinder 31 mittels einer Schwenkbewegung um die Drehachse in eine räumliche Lage bringbar sein, in welcher der Innenraum 32 des Brühzylinders 31 auf eine einfache Weise direkt von oben mit Kaffeepulver gefüllt werden kann, welches dem Innenraum 32 von oben entlang einer Vertikalen zuführbar ist (analog zu einem entsprechenden Brühzylinder, welcher aus der Veröffentlichung EP 0 559 620 A1 bekannt ist).

Wie Fig. 1-3 andeuten, umfasst die Fluidfördereinrichtung 15 des Fluidsystems 12: einen Tank 20 zur Aufnahme eines zum Erzeugen eines Kaffeegetränks geeigneten Fluids (z.B. frisches Wasser); eine an einen Fluid-Auslass 20a des Tanks 20 angeschlossene Fluidleitung 21, durch welche ein im Tank 20 enthaltenes Fluid förderbar ist; eine Durchflussmesseinrichtung 22 zum Messen eines Durchflusses eines durch die Fluidleitung 21 geförderten Fluids; eine Fluidpumpe 23 zum Fördern eines Fluids durch die Fluidleitung 21; eine Heizeinrichtung 24 (z.B. eine als Durchlauferhitzer ausgebildete Heizeinrichtung), welche ausgebildet ist, ein durch die Fluidleitung 21 gefördertes Fluid auf eine vorgegebene oder vorgebbare Temperatur aufzuheizen, beispielsweise auf eine Temperatur im Bereich von 75-115 °C, und ein entsprechend erhitztes Fluid über einen Ausgang 24a der Heizeinrichtung 24 auszugeben.

Wie Fig. 1-3 andeuten, ist die Fluid-Sufuhrleitung 26 des Fluidsystems 12 derart implementiert, dass ein Ende der Fluid-Zufuhrleitung 26 an den vorstehend genannten Ausgang 24a der Heizeinrichtung 24 und ein anderes Ende der Fluid-Zufuhrleitung 26 an den Fluid-Einlass 36 der Brühkammer 35 angeschlossen ist, sodass ein mittels der Heizeinrichtung 24 erhitztes Fluid mittels der Fluidpumpe 23 von der Heizeinrichtung 24 über die Fluid-Zufuhrleitung 26 und den Fluid-Einlass 36 der Brühkammer 35 in die Brühkammer 35 gefördert werden kann.

Wie Fig. 1-3 andeuten, ist in die Fluid-Zufuhrleitung 26 ein Rückschlagventil 27 integriert, welches derart ausgebildet ist, dass ein Fluid, welches aus dem Ausgang 24a der Heizeinrichtung 24 ausgeben und mittels der Fluidfördereinrichtung 15 durch die Fluid-Zufuhrleitung 26 gefördert wird, jeweils den Fluid-Einlass 36 der Brühkammer 35 erreicht, während jeder Fluss eines Fluids in die entgegengesetzte Richtung (d.h. jeder Fluss eines Fluids vom Fluid-Einlass 36 der Brühkammer 35 durch die Fluid-Zufuhrleitung 26 zum Ausgang 24a der Heizeinrichtung 24) mittels des Rückschlagventils 27 blockiert wird.

Wie Fig. 1-3 andeuten, weist der Kaffeeautomaten 10 ausserdem einen Drainage-Ausgang 65 auf, welcher mit der Brühkammer 35 und/oder der Fluid-Zufuhrleitung 26 in eine Fluidverbindung bringbar ist oder in einer Fluidverbindung steht und ausgebildet ist, ein Restfluid aus der Fluid-Zufuhrleitung 26 und/oder der Brühkammer 35 in einen Restfluid-Behälter 70 auszugeben. Der Drainage-Ausgang 65 ist räumlich getrennt (separat) von dem Fluid-Auslass 45 der Brühkammer 35 ausgebildet. Der Begriff "Restfluid" bezeichnet in diesem Zusammenhang ein Fluid, welches zwar während eines Betriebs des Kaffeeautomaten 10 in die Fluid-Zufuhrleitung 26 und/oder die Brühkammer 35 gelangt ist, allerdings keinen Bestandteil eines Kaffeegetränks bildet und dementsprechend nicht über den Fluid-Auslass 45 und insbesondere nicht zusammen mit einem in der Brühkammer 35 zubereiteten Kaffeegetränk aus der Brühkammer 35 ausgegeben werden soll. Um eine Ausgabe eines derartigen Restfluids durch den Drainage-Ausgang 65 kontrollieren zu können, umfasst der Kaffeeautomat 10 ein steuerbares Wegeventil 28, welches ausgebildet ist, bei Bedarf eine Fluidverbindung oder mehrere verschiedene Fluidverbindungen zwischen der Fluid-Zufuhrleitung 26, dem Fluid-Einlass 36 der Brühkammer 35 und/oder dem Drainage-Ausgang 65 herzustellen. Im vorliegenden Beispiel ist das Wegeventil 28 als "3/2-Wegeventil" ausgebildet, d.h. das Wegeventil 28 ist in zwei verschiedene Schaltstellungen bringbar, um (abhängig von der jeweiligen Schaltstellung des Wegeventils 28) eine Realisierung von zwei verschiedenen Fluidverbindungen zwischen drei verschiedenen Anschlüssen des Wegeventil 28 zu ermöglichen, wobei die Fluid-Zufuhrleitung 26, der Fluid-Einlass 36 der Brühkammer 35 und der Drainage-Ausgang 65 jeweils an einen der vorstehend genannten Anschlüsse des Wegeventil 28 angeschlossen sind.

Fig. 1 zeigt den Kaffeeautomaten 10 in einem Zustand, in welchem das Wegeventil 28 in eine der zwei verschiedenen Schaltstellungen gebracht ist. Gemäss dieser Schaltstellung des Wegeventils 28 stehen die Fluid-Zufuhrleitung 26, der Fluid-Einlass 36 der Brühkammer 35 und der Drainage-Ausgang 65 über das Wegeventil 28 in Fluidverbindung miteinander. In diesem Fall wird ein Fluid, welches vom Ausgang 24a der Heizeinrichtung 24 mittels der Fluidpumpe 23 durch die Fluid-Zufuhrleitung 26 zum Wegeventil 28 gefördert wird, über das Wegeventil 28 sowohl zum Fluid-Einlass 36 der Brühkammer 35 als auch zum Drainage-Ausgang 65 bzw. über den Drainage-Ausgang 65 in den Restfluid-Behälter 70 geführt. Entsprechend kann ein Fluid aus der Brühkammer 35 über den Fluid-Einlass 36 der Brühkammer 35 und das Wegeventil 28 zum Drainage-Ausgang 65 geführt werden, sodass das Fluid schliesslich über den Drainage-Ausgang 65 in den Restfluid-Behälter 70 gelangen kann.

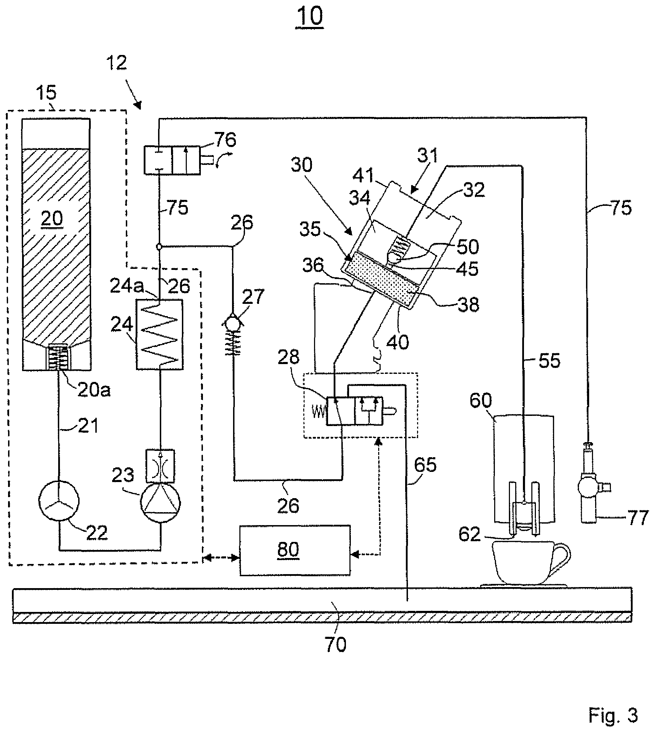

Im Gegensatz zu Fig. 1 zeigen die Fig. 2 und 3 den Kaffeeautomaten 10 in Zuständen, in welchen das Wegeventil 28 jeweils in die andere der zwei verschiedenen Schaltstellungen gebracht ist. Gemäss dieser anderen der zwei Schaltstellungen des Wegeventils 28 steht die Fluid-Zufuhrleitung 26 mit dem Fluid-Einlass 36 der Brühkammer 35 in Fluidverbindung, während der Drainage-Ausgang 65 weder mit der Fluid-Zufuhrleitung 26 noch mit dem Fluid-Einlass 36 der Brühkammer 35 in Fluidverbindung steht. In diesem Fall wird ein Fluid, welches vom Ausgang 24a der Heizeinrichtung 24 mittels der Fluidpumpe 23 durch die Fluid-Zufuhrleitung 26 zum Wegeventil 28 gefördert wird, über das Wegeventil 28 zum Fluid-Einlass 36 der Brühkammer 35, aber nicht zum Drainage-Ausgang 65 geführt.

Wie Fig. 1-3 andeuten, ist der Fluid-Einlass 36 der Brühkammer 35 im vorliegenden Beispiel im Bereich der Stirnfläche 40 des Brühzylinders 31 (bzw. des Innenraums 32) angeordnet, so dass ein Fluid, welches vom Ausgang 24a der Heizeinrichtung 24 mittels der Fluidpumpe 23 durch die Fluid-Zufuhrleitung 26 und durch das Wegeventil 28 zum Fluid-Einlass 36 gefördert wird, im Bereich der Stirnfläche 40 in die Brühkammer 35 strömen kann. Der Fluid-Auslass 45 der Brühkammer 35 ist im vorliegenden Beispiel im Brühkolben 34 derart ausgebildet, dass der Fluid-Auslass 45 an einem der Brühkammer 35 zugewandten Ende des Fluid-Auslasses 45 im Bereich der Stirnfläche 34a des Brühkolbens 34 zur Brühkammer 35 hin offen ist und an einem von der Brühkammer 35 abgewandten Ende des Fluid-Auslasses 45 mit einem Ende einer Kaffee-Ausgabeleitung 55 verbunden ist. Die Kaffee-Ausgabeleitung 55 ist mit einem anderen Ende an eine mit zumindest einer Kaffee-Ausgangsöffnung 62 versehene Kaffee-Ausgabeeinrichtung 60 angeschlossen, sodass ein in der Brühkammer 35 zubereitetes Kaffeegetränk durch den Fluid-Auslass 45 der Brühkammer 35 und die Kaffee-Ausgabeleitung 55 zur Kaffee-Ausgabeeinrichtung 60 fliessen kann und schliesslich durch die Kaffee-Ausgangsöffnung 62 ausgegeben werden kann, beispielsweise in ein Trinkgefäss.

Wie Fig. 1-3 weiterhin andeuten, ist in den Fluid-Auslass 45 ein konventionelles Cremaventil 50 integriert, welches ausgebildet ist, einen Fluss eines Fluids aus der Brühkammer 35 durch den Fluid-Auslass 45 in die Kaffee-Ausgabeleitung 55 wahlweise zu verhindern oder freizugeben, und zwar in Abhängigkeit von dem momentanen Druck des Fluids in der Brühkammer 35. Im vorliegenden Beispiel ist das Cremaventil 50 derart implementiert, dass das Cremaventil 50 einen Fluss eines Fluids aus der Brühkammer 35 durch den Fluid-Auslass 45 in die Kaffee-Ausgabeleitung 55 freigibt, sofern der Druck des Fluids in der Brühkammer 35 grösser als ein vorgegebener Grenzwert (z.B. grösser als 3 bar) ist. Auf diese Weise ermöglicht das Cremaventil 50, Kaffeepulver in der Brühkammer 35 mit einem unter Druck stehenden Fluid zu brühen, um beispielsweise ein Kaffeegetränk wie Espresso zubereiten zu können. Die Fluidpumpe 23 ist dementsprechend ausgebildet, ein Fluid mit einem Druck im Bereich von 4-20 bar durch die Fluid-Zufuhrleitung 26 in die Brühkammer 35 zu fördern.

Wie Fig. 1-3 andeuten, umfasst der Kaffeeautomat 10 einen Auslass 77 zum Ausgeben von Heisswasser und/oder Dampf, welcher mittels einer Heisswasser- und/oder Dampfleitung 75 an den Ausgang 24a der Heizeinrichtung 24 angeschlossen ist. Um einen Fluss von Heisswasser und/oder Dampf durch die Heisswasser- und/oder Dampfleitung 75 kontrollieren zu können, ist in die Heisswasser- und/oder Dampfleitung 75 ein steuerbares Ventil 76 integriert, welches wahlweise geöffnet oder geschlossen werden kann, um ein Fluss von Heisswasser und/oder Dampf zum Auslass 77 freizugeben bzw. zu verhindern.

Der Kaffeeautomat 10 ist ausserdem mit einer Steuereinheit 80 ausgestattet, um einen automatischen Betrieb des Kaffeeautomaten 10 zu ermöglichen. Die Steuereinheit 80 ist zu diesem Zweck insbesondere mit der Brühvorrichtung 30 verbunden, um beispielsweise die Position des Brühkolbens 34 relativ zur Stirnfläche 40 des Brühzylinders 31 (bzw. des Innenraums 32) und das Einbringen einer vorbestimmten Menge Kaffeepulver in die Brühkammer 35 steuern zu können. Die Steuereinheit 80 ist ausserdem mit der Durchflussmesseinrichtung 22, der Fluidpumpe 23, der Heizeinrichtung 24, dem Wegeventil 28 und dem Ventil 76 verbunden, um die Fluidpumpe 23, die Heizeinrichtung 24, das Wegeventil 28 und das Ventil 76 steuern zu können. Die Fluidpumpe 23, das Wegeventil 28 und das Ventil 76 sind mittels der Steuereinheit 80 ansteuerbar, um ein im Tank 20 bereitgestelltes Fluid (z.B. frisches Wasser) wahlweise durch die Fluid-Zufuhrleitung 26 oder die Heisswasser- und/oder Dampfleitung 75 fördern zu können. Die Heizeinrichtung 24 ist mittels der Steuereinheit 80 ansteuerbar, um das von der Fluidpumpe 23 geförderte Fluid auf eine vorgegebene bzw. vorgebbare Temperatur zu erhitzen.

Im Folgenden wird mit Bezug auf Fig. 1-3 eine Ausführungsform des erfindungsgemässen Verfahrens erläutert.

Als Beispiel wird im Folgenden die Erzeugung eines Kaffeegetränks, insbesondere die Erzeugung einer "kleinen" Menge eines Kaffeegetränks mit einem Volumen im Bereich von 20-50 ml (z.B. Espresso), mithilfe des Kaffeeautomaten 10 diskutiert. Es wird angenommen, dass zur Erzeugung des Kaffeegetränks in der Brühkammer 35 der Brühvorrichtung 30 Kaffeepulver mit erhitzten Fluid (Wasser) gebrüht werden soll, welches vorzugsweise eine Temperatur im Bereich vom 90-95 °C aufweisen soll.

Es wird weiterhin angenommen, dass zu Beginn des Verfahrens die Brühkammer 35 der Brühvorrichtung 30 leer ist, d.h. nicht mit dem Kaffeepulver, welches für die Erzeugung des Kaffeegetränks benötigt wird, gefüllt ist. Es wird ausserdem angenommen, dass zu Beginn des Verfahrens die Steuereinheit 80 des Kaffeeautomaten 10 von einer Bedienperson einen die Erzeugung des Kaffeegetränks initiierenden "Befehl" erhält, beispielsweise in Form von Steuersignalen, welche beispielsweise mithilfe von manuell betätigbaren Bedienelementen erzeugbar und an die Steuereinheit 80 übermittelbar sind. Weiterhin wird angenommen, dass der Kaffeeautomat 10 während einer längeren Wartezeit vor diesem initiierenden "Befehl" nicht veranlasst worden war, ein Kaffeegetränk zu erzeugen. Unter diesen Umständen wird davon ausgegangen, dass die Fluid-Zufuhrleitung 26 und die Brühvorrichtung 30 während der Wartezeit auf eine Temperatur abgekühlt sind, welche wesentlich geringer als 90-95 °C ist.

Die Fig. 1 zeigt den Kaffeeautomaten 10 während eines ersten Schritts des Verfahrens unmittelbar nach dem initiierenden "Befehl". Die Steuereinheit 80 steuert die Brühvorrichtung 30 derart an, dass die Stirnfläche 34a des Brühkolbens 34 relativ zur Stirnfläche 40 des Brühzylinders 31 (bzw. des Innenraums 32) einen Abstand D1 aufweist, welcher möglichst gering ist, sodass das Volumen der Brühkammer 35 möglichst klein ist. Vorzugsweise kann der Brühzylinder 31 derart ausgebildet sein, dass D1=0 beträgt und dementsprechend das Volumen der Brühkammer 35 gleich 0 ist. Die Steuereinheit 80 steuert weiterhin das Wegeventil 28 derart an, dass das Wegeventil 28 in die in Fig. 1 dargestellte Schaltstellung gebracht wird. Die Steuereinheit 80 steuert ausserdem die Fluidpumpe 23 und die Heizeinrichtung 24 derart an, dass im Tank 20 bereitgestelltes Fluid (z.B. frisches Wasser) mittels der Heizeinrichtung 24 auf eine Temperatur im Bereich von 75-115°C aufgeheizt wird und mittels der Fluidpumpe 23 durch die Fluid-Zufuhrleitung 26 zum Wegeventil 28 gefördert wird. Da die Position des Brühkolbens 34 so gewählt ist, das D1 möglichst klein (vorzugsweise gleich 0) ist und ausserdem die Fluid-Zufuhrleitung 26 mit dem Drainage-Ausgang 65 in einer Fluidverbindung steht, strömt in diesem Fall das mittels der Heizeinrichtung 24 erhitzte Fluid im Wesentlichen durch die Fluid-Zufuhrleitung 26 zum Drainage-Ausgang 65 und durch den Drainage-Ausgang 65 in den Restfluid-Behälter 70. Abgestandenes, relativ kaltes Fluid, welche gegebenenfalls zuvor in der Fluid-Zufuhrleitung 26 vorhanden und abgekühlt war, wird hierbei vollständig durch das mittels der Heizeinrichtung 24 erhitzte Fluid aus der Fluid-Zufuhrleitung 26 verdrängt und ebenfalls durch den Drainage-Ausgang 65 in den Restfluid-Behälter 70 gefördert. Die hierbei durch die Fluid-Zufuhrleitung 26 geförderte Menge des erhitzten Fluids kann beispielsweise ca. 20 ml betragen. Das erhitzte Fluid führt schliesslich zu einer Erwärmung der Fluid-Zufuhrleitung 26.

Die Fig. 2 zeigt den Kaffeeautomaten 10 während eines zweiten Schritts des Verfahrens, welcher unmittelbar auf den in Fig. 1 dargestellten ersten Schritt folgt. Die Brühkammer 35 ist hierbei nicht mit Kaffeepulver gefüllt (wie im ersten Schritt des Verfahrens gemäss Fig. 1). Die Steuereinheit 80 steuert die Brühvorrichtung 30 derart an, dass die Stirnfläche 34a des Brühkolbens 34 relativ zur Stirnfläche 40 des Brühzylinders 31 (bzw. des Innenraums 32) einen Abstand D2 aufweist, welcher grösser als D1 ist, beispielsweise derart, dass die Brühkammer 35 ein Volumen von ca. 10 ml aufweist. Die Steuereinheit 80 steuert weiterhin das Wegeventil 28 derart an, dass das Wegeventil 28 in die in Fig. 2 dargestellte Schaltstellung gebracht wird. In diesem Fall steht die Fluid-Zufuhrleitung 26 mit dem Fluid-Einlass 36 der Brühkammer 35 in Fluidverbindung, während der Drainage-Ausgang 65 weder mit der Fluid-Zufuhrleitung 26 noch mit dem Fluid-Einlass 36 der Brühkammer 35 in Fluidverbindung steht. Die Steuereinheit 80 steuert ausserdem die Fluidpumpe 23 und die Heizeinrichtung 24 derart an, dass im Tank 20 bereitgestelltes Fluid (z.B. frisches Wasser) mittels der Heizeinrichtung 24 auf eine Temperatur im Bereich von 75-115°C aufgeheizt wird und mittels der Fluidpumpe 23 durch die Fluid-Zufuhrleitung 26 und das Wegeventil 28 in die Brühkammer 35 gefördert wird.

Im Falle der in Fig. 2 dargestellten Schaltstellung des Wegeventils 28 kann das in die Brühkammer 35 geförderte erhitzte Fluid nicht über den Drainage-Ausgang 65 in den Restfluid-Behälter 70 gelangen, sondern verbleibt in der Brühkammer 35. Vorzugsweise wird eine Menge erhitzten Fluids in die Brühkammer 35 gefördert, welche derart gross ist, dass die Brühkammer 35 vollständig mit dem erhitztem Fluid gefüllt ist. Das Wegeventil 28 wird derart gesteuert, dass das erhitzte Fluid während eines vorbestimmten Zeitintervalls, beispielsweise in einem Zeitintervall mit einer Dauer im Bereich von 0-10 Sekunden, in der Brühkammer 35 verbleibt. Während dieses Zeitintervalls werden der Brühzylinder 31 und der Brühkolben 34 in denjenigen Bereichen aufgeheizt, welche mit dem erhitzten Fluid in Kontakt sind, d.h. im Bereich der Stirnfläche 40 und der Seitenwand 41 des Brühzylinders 31 und im Bereich der Stirnfläche 34a des Brühkolbens 34. Das in der Brühkammer 35 befindliche Fluid kann hierbei abkühlen.

Anschliessend wird das Wegeventil 28 von der Steuereinheit 80 derart gesteuert, dass das Wegeventil 28 die in Fig. 1 dargestellt Schaltstellung annimmt. Gemäss dieser Schaltstellung des Wegeventils 28 stehen die Fluid-Zufuhrleitung 26, der Fluid-Einlass 36 der Brühkammer 35 und der Drainage-Ausgang 65 über das Wegeventil 28 in Fluidverbindung miteinander. Entsprechend kann das Fluid aus der Brühkammer 35 über den Fluid-Einlass 36 der Brühkammer 35 und das Wegeventil 28 zum Drainage-Ausgang 65 geführt werden, sodass das Fluid schliesslich über den Drainage-Ausgang 65 in den Restfluid-Behälter 70 gelangen kann. Um hierbei das Fluid aus der Brühkammer 35 über den Drainage-Ausgang 65 in den Restfluid-Behälter 70 zu fördern, steuert die Steuereinheit 80 die Brühvorrichtung 30 derart, dass sich der Brühkolben 34 entlang der Längsachse LA in Richtung auf die Stirnfläche 40 des Brühzylinders 31 (bzw. des Innenraums 32) bewegt und das Fluid durch den Fluid-Einlass 36 aus der Brühkammer 35 ausstösst. Die Fig. 3 zeigt den Kaffeeautomaten 10 während eines dritten Schritts des Verfahrens, welcher unmittelbar auf den in Fig. 2 dargestellten zweiten Schritt folgt. Während des dritten Schritts wird in die Brühkammer 35, welche in dem oben beschriebenen zweiten Schritt des Verfahrens geheizt und somit auf eine erhöhte Temperatur gebracht wurde, eine vorbestimmte Menge Kaffeepulver 38 eingebracht. In Fig. 3 ist der Kaffeeautomat 10 in einer Situation dargestellt, in welcher die vorbestimmte Menge Kaffeepulver 38 bereits in die Brühkammer 35 eingebracht ist (wie oben beschrieben).

Die Steuereinheit 80 steuert weiterhin das Wegeventil 28 derart an, dass das Wegeventil 28 in die in Fig. 3 dargestellte Schaltstellung gebracht wird. In diesem Fall steht die Fluid-Zufuhrleitung 26 mit dem Fluid-Einlass 36 der Brühkammer 35 in Fluidverbindung, während der Drainage-Ausgang 65 weder mit der Fluid-Zufuhrleitung 26 noch mit dem Fluid-Einlass 36 der Brühkammer 35 in Fluidverbindung steht. Die Steuereinheit 80 steuert ausserdem die Fluidpumpe 23 und die Heizeinrichtung 24 derart an, dass im Tank 20 bereitgestelltes Fluid (z.B. frisches Wasser) mittels der Heizeinrichtung 24 auf eine Temperatur im Bereich von 90-95°C aufgeheizt wird und mittels der Fluidpumpe 23 durch die Fluid-Zufuhrleitung 26 und das Wegeventil 28 in die Brühkammer 35 gefördert wird. Durch Brühen des Kaffeepulvers mit dem erhitzen Fluid wird schliesslich ein Kaffeegetränk in der Brühkammer 35 erzeugt, welches durch den Fluid-Auslass 45 der Brühkammer 35 der Kaffee-Ausgabeeinrichtung 60 zugeführt und schliesslich durch die Kaffee-Ausgangsöffnung 62 ausgegeben wird.

Mithilfe des oben beschriebenen Vorheizens der Fluid-Zufuhrleitung 26 und der Brühvorrichtung 30 ist es möglich, die Temperatur des aus der Kaffee-Ausgangsöffnung 62 ausgegebenen Kaffeegetränks massiv zu erhöhen, falls der Kaffeeautomat 10 zuvor während einer längeren Wartezeit nicht veranlasst worden war, ein Kaffeegetränk zu erzeugen.

Es ist deshalb zweckmässig, das oben beschriebene Vorheizen der Fluid-Zufuhrleitung 26 und der Brühvorrichtung 30 vor dem Erzeugen eines Kaffeegetränks automatisch nur dann zu veranlassen, wenn die Wartezeit, während welcher der Kaffeeautomat 10 zuvor nicht veranlasst worden war, ein Kaffeegetränk zu erzeugen, eine vorgegebene Grenze (beispielsweise zwei Minuten) überschreitet. Diese Steuerung des Vorheizens in Abhängigkeit von der Wartezeit ermöglicht eine Kontrolle der Temperatur der jeweils erzeugten Kaffeegetränke bei einem relativ geringen Energieverbrauch.

Es sei ferner darauf hingewiesen, dass die Brühvorrichtung 30 im Rahmen der Erfindung hinsichtlich ihrer Struktur unterschiedlich zu der in den Fig. 1-3 dargestellten Ausführungsform ausgebildet sein kann, insbesondere hinsichtlich der Anordnung der Stirnfläche 40 des Brühzylinders 31 (bzw. des Innenraums 32), des Brühkolbens 34, des Fluid-Einlasses 36, des Fluid-Auslasses 45 und des Drainage-Ausgangs 65. In der Ausführungsform der Brühvorrichtung 30 gemäss Fig. 1-3 ist die Stirnfläche 40 des Brühzylinders 31 (bzw. des Innenraums 32) unterhalb der Brühkammer 35 und der Stirnfläche 34a des Brühkolbens 34 angeordnet. Alternativ wäre es auch möglich, dass die Stirnfläche 40 des Brühzylinders 31 (bzw. des Innenraums) oberhalb der Brühkammer 35 und der Stirnfläche 34a des Brühkolbens 34 angeordnet ist.

In der Ausführungsform der Brühvorrichtung 30 gemäss Fig. 1-3 sind der Fluid-Einlass 36 zum Einlassen des erhitzen Fluids in die Brühkammer 35 und der Fluid-Auslass 45 zum Ausgeben eines in der Brühkammer 35 erzeugten Kaffeegetränks derart angeordnet, dass das erhitzte Fluid von unten durch den unterhalb der Brühkammer 35 angeordneten Fluid-Einlass 36 in die Brühkammer 35 einleitbar ist und ein in der Brühkammer 35 erzeugtes Kaffeegetränk durch den oberhalb der Brühkammer 35 angeordneten Fluid-Auslass 45 aus der Brühkammer 35 nach oben abführbar ist. Alternativ kann der Fluid-Einlass 36 zum Einlassen des erhitzen Fluids in die Brühkammer 35 und der Fluid-Auslass 45 zum Ausgeben eines in der Brühkammer 35 erzeugten Kaffeegetränks derart angeordnet sein, dass das erhitzte Fluid von oben durch einen oberhalb der Brühkammer 35 angeordneten Fluid-Einlass in die Brühkammer 35 einleitbar ist und ein in der Brühkammer 35 erzeugtes Kaffeegetränk durch einen unterhalb der Brühkammer 35 angeordneten Fluid-Auslass aus der Brühkammer 35 nach unten abführbar ist.

In der Ausführungsform der Brühvorrichtung 30 gemäss Fig. 1-3 ist der Drainage-Ausgang 65 derart implementiert, dass ein Restfluid aus der Brühkammer 35 über den Fluid-Einlass 36 nach unten abfliessen und über das Wegeventil 28 schliesslich zum Drainage-Ausgang 65 gelangen kann. Alternativ kann der Drainage-Ausgang auch der derart implementiert sein, dass er separat vom Fluid-Einlass 36 ausgebildet ist und direkt (z.B. in einer vorgegebenen Distanz zum Fluid-Einlass 36) in die Brühkammer 35 mündet.

## Patentansprüche

1. Verfahren zum Erzeugen eines Kaffeegetränks in einem Kaffeeautomaten (10),
wobei der Kaffeeautomat (10) aufweist:
eine Brühvorrichtung (30) mit einer Brühkammer (35) zum Aufnehmen von Kaffeepulver, welche Brühkammer (35) zumindest einen Fluid-Einlass (36) und einen Fluid-Auslass (45) umfasst;
ein Fluidsystem (12) mit einer mit dem Fluid-Einlass (36) verbundenen Fluid-Zufuhrleitung (26) und einer Fluidfördereinrichtung (15) zum Fördern eines erhitzten Fluids durch die Fluid-Zufuhrleitung (26) und mit einem von dem Fluid-Auslass (45) separaten Drainage-Ausgang (65),
welcher Drainage-Ausgang (65) mit der Brühkammer (35) und/oder der Fluid-Zufuhrleitung (26) in eine Fluidverbindung bringbar ist oder in einer Fluidverbindung steht, sodass ein Restfluid aus der Fluid-Zufuhrleitung (26) und/oder der Brühkammer (35) durch den Drainage-Ausgang (65) ausgebbar ist;
wobei die Brühvorrichtung (30) umfasst:
einen Brühzylinder (31) mit einem eine Längsachse (LA) aufweisenden Innenraum (32), welcher an einer Stirnseite durch eine sich quer zur Längsachse (LA) erstreckende Stirnfläche (40) und radial zur Längsachse (LA) durch eine sich um die Längsachse (LA) erstreckende Seitenwand (41) begrenzt ist;
einen Brühkolben (34), welcher sich in Richtung der Längsachse (LA) erstreckt, sodass eine Stirnfläche (34a) des Brühkolbens (34) der Stirnfläche (40) des Innenraums (32) gegenüberliegend angeordnet ist,
wobei die Brühkammer (35) sich zwischen der Stirnfläche (40) des Innenraums (32), der Stirnfläche (34a) des Brühkolbens (34) und der Seitenwand (41) erstreckt und
der Brühkolben (34) entlang der Längsachse (LA) bewegbar ist, sodass ein Abstand (D1, D2) zwischen der Stirnfläche (40) des Innenraums (32) und dem Brühkolben (34) veränderbar ist;
wobei das Verfahren die folgenden Schritte (a)-(d) aufweist:
(a) Einbringen einer vorbestimmten Menge Kaffeepulver (38) in die Brühkammer (35),
(b) Fördern von erhitztem Fluid durch die Fluid-Zufuhrleitung (26) in die Brühkammer (35) zum Zubereiten eines Kaffeegetränks durch Brühen des Kaffeepulvers in der Brühkammer (35) und Ausgeben eines zubereiteten Kaffeegetränks aus der Brühkammer (35) durch den Fluid-Auslass (45),
(c) Zuführen einer ersten Menge erhitzten Fluids durch die Fluid-Zufuhrleitung (26) in die Brühkammer, wobei der Schritt (c) vor dem Schritt (a) ausgeführt wird,
(d) Ausgeben zumindest eines Teils der im Schritt (c) zugeführten ersten Menge erhitzten Fluids aus der Brühkammer (35) vor Beginn des Schritts (a),
wobei im Schritt (d) der zumindest eine Teil der im Schritt (c) zugeführten ersten Menge erhitzten Fluids durch den Drainage-Ausgang (65) ausgegeben wird, **dadurch gekennzeichnet, dass**
das Verfahren die folgenden Schritte (f) und (g) umfasst:
(f) vor Beginn oder während Schritt (c) wird der Brühkolben (34) derart angeordnet, dass der Brühkolben (34) einen ersten vorgegebenen Abstand (D2) relativ zur Stirnfläche (40) des Innenraums (32) aufweist;
(g) während Schritt (d) wird der Brühkolben (34) entlang der Längsachse (LA) bewegt, sodass der Brühkolben (34) relativ zur Stirnfläche (40) des Innenraums (32) einen Abstand (D1) aufweist, welcher kleiner als der erste vorgegebene Abstand (D2) ist.

2. Verfahren nach Anspruch 1,
wobei der Schritt (c) in einem vorgegebenen ersten Zeitintervall vor Beginn des Schritts (a) ausgeführt wird.

3. Verfahren nach einem der Ansprüche 1-2, wobei der Schritt d) in einem vorgegebenen zweiten Zeitintervall vor Beginn des Schritts (a) ausgeführt wird.

4. Verfahren nach Anspruch 3, wobei
das Zuführen der ersten Menge erhitzten Fluids gemäss Schritt (c) an einem ersten Endzeitpunkt beendet wird und der Beginn des zweiten Zeitintervalls mit einer vorgegebenen ersten Zeitdifferenz auf den ersten Endzeitpunkt folgt.

5. Verfahren nach Anspruch 4, wobei
die erste Zeitdifferenz 0 bis 10 Sekunden beträgt.

6. Verfahren nach einem der Ansprüche 1-3, wobei
das Zuführen einer ersten Menge erhitzten Fluids gemäss Schritt (c) an einem ersten Endzeitpunkt beendet wird, das Einbringen der vorbestimmten Menge Kaffeepulver (38) in die Brühkammer (35) gemäss Schritt (a) nach Schritt (c) während eines dritten Zeitintervalls erfolgt und der Beginn des dritten Zeitintervalls mit einer vorgegebenen zweiten Zeitdifferenz auf den ersten Endzeitpunkt erfolgt.

7. Verfahren nach Anspruch 6, wobei
die zweite Zeitdifferenz 1 bis 20 Sekunden beträgt.

8. Verfahren nach einem der Ansprüche 1-7, wobei das Verfahren den folgenden Schritt (e) umfasst:
(e) Fördern einer zweiten Menge erhitzten Fluids durch die Fluid-Zufuhrleitung (26) und Ausgeben der zweiten Menge erhitzten Fluids durch den Drainage-Ausgang (65),
wobei Schritt (e) vor Schritt (c) ausgeführt wird.

9. Verfahren nach Anspruch 8, wobei
der Kaffeeautomat (10) einen Restfluid-Behälter (70) zum Aufnehmen eines aus dem Drainage-Ausgang (65) ausgegebenen Restfluids umfasst, und
wobei im Schritt (e) die zweite Menge erhitzten Fluids in den Restfluid-Behälter (70) ausgegeben wird.

10. Verfahren nach einem der Ansprüche 1-8, wobei der Kaffeeautomat (10) einen Restfluid-Behälter (70) zum Aufnehmen eines aus dem Drainage-Ausgang (65) ausgegebenen Restfluids umfasst, und
wobei im Schritt (d) der zumindest eine Teil der im Schritt (c) zugeführten ersten Menge erhitzten Fluids in den Restfluid-Behälter (70) ausgegeben wird.

11. Verfahren nach einem der Ansprüche 1-10, wobei das erhitzte Fluid beim Zuführen gemäss Schritt (c) eine Temperatur aufweist, welche im Bereich von 75-115°C liegt.

12. Verfahren nach Anspruch 8 oder 9, wobei das erhitzte Fluid beim Fördern gemäss Schritt (e) eine Temperatur aufweist, welche im Bereich von 75-115°C liegt.

13. Verfahren nach einem der Ansprüche 1-12, wobei die erste Menge erhitzten Fluids ein Volumen aufweist, welches derart gross ist, dass während Schritt (c) die Brühkammer (35) ganz oder teilweise mit erhitztem Fluid gefüllt wird.

14. Verfahren nach Anspruch 8 oder 9,
welches den folgenden Schritt (h) umfasst:
(h) vor Beginn oder während Schritt (e) wird der Brühkolben (34) derart angeordnet, dass der Brühkolben (34) relativ zur Stirnfläche (40) des Innenraums (32) einen Abstand (D1) aufweist, welcher gleich einem vorgegebenen Minimalwert ist.

## Claims

1. Method for producing a coffee beverage in a coffee machine (10),
wherein the coffee machine (10) comprises:
a brewing device (30) with a brewing chamber (35) for receiving coffee powder, said brewing chamber (35) comprising at least one fluid inlet (36) and one fluid outlet (45);
a fluid system (12) with a fluid feed line (26) connected to the fluid inlet (36) and a fluid conveyor (15) for conveying a heated fluid through the fluid feed line (26) and with a drainage outlet (65) separate from the fluid outlet (45),
said drainage outlet (65) being in, or being configured to be brought into fluidic connection with the brewing chamber (35) and/or the fluid feed line (26) so that a residual fluid is enabled to be discharged from the fluid feed line (26) and/or the brewing chamber (35) through the drainage outlet (65);
wherein the brewing device (30) comprises:
a brewing cylinder (31) with an internal space (32) which has a longitudinal axis (LA) and is limited on one end face by an end surface (40) extending transversely to the longitudinal axis (LA) and is limited radially to the longitudinal axis (LA) by a side wall (41) extending about the longitudinal axis (LA) ;
a brewing piston (34) which extends in the direction of the longitudinal axis (LA) so that an end surface (34a) of the brewing piston (34) is arranged opposite the end surface (40) of the internal space (32),
wherein the brewing chamber (35) extends between the end surface (40) of the internal space (32), the end surface (34a) of the brewing piston (34) and the side wall (41) and the brewing piston (34) is configured to be moved along the longitudinal axis (LA) so that a distance (D1, D2) between the end surface (40) of the internal space (32) and the brewing piston (34) is changeable;
wherein the method comprises the following steps (a) - (d) :
(a) introducing a predetermined quantity of coffee powder (38) into the brewing chamber (35),
(b) conveying heated fluid through the fluid feed line (26) into the brewing chamber (35) for preparing a coffee beverage through brewing the coffee powder in the brewing chamber (35) and dispensing a prepared coffee beverage from the brewing chamber (35) through the fluid outlet (45),
(c) conveying a first quantity of heated fluid through the fluid feed line (26) into the brewing chamber, whereby step (c) is carried out before step (a),
(d) discharging at least one part of the first quantity of heated fluid supplied in step (c) from the brewing chamber (35) before the start of step (a), wherein in step (d), the at least one part of the first quantity of heated fluid supplied in step (c) is discharged through the drainage outlet (65),
**characterised in that**
the method comprises the following steps (f) and (g):
(f) before the start of or during step (c), the brewing piston (34) is arranged in such a way that the brewing piston (34) is at a first predetermined distance (D2) relative to the end surface (40) of the internal space (32);
(g) during step (d), the brewing piston (34) is moved along the longitudinal axis (LA) so that the brewing piston (34) is relative to the end surface (40) of the internal space (32) at a distance (D1) which is smaller than the first predetermined distance (D2).

2. Method according to claim 1 wherein step (c) in carried out at a predetermined first time interval before the start of step (a).

3. Method according to any one of claims 1 - 2 wherein step (d) is carried out at a predetermined second time interval before the start of step (a).

4. Method according to claim 3, wherein the the conveying of the first quantity of heated fluid in accordance with step (c) is ended at a first end time and the start of the second time interval follows the first end time with a predetermined first time difference.

5. Method according to claim 4 wherein the first time difference is 0 to 10 seconds.

6. Method according to any one of claims 1-3, wherein the conveying of a first quantity of heated fluid in accordance with step (c) is ended at a first end time, the introduction of the predetermined quantity of coffee powder (38) into the brewing chamber (35) in accordance with step (a) takes place after step (c) during a third time interval and the start of the third time interval follows the first end time with a predetermined second time difference.

7. Method according to claim 6 wherein the second time difference is 1 to 20 seconds.

8. Method according to any one of claims 1-7 wherein the method comprises the following step (e):
(e) conveying a second quantity of heated fluid through the fluid feed line (26) and discharging the second quantity of heated fluid through the drainage outlet (65),
wherein step (e) is carried out before step (c).

9. Method according to claim 8 wherein
the coffee machine (10) comprises a residual fluid container (70) for receiving a residual fluid discharged from the drainage outlet (65), and
wherein in step (e) the second quantity of heated fluid is discharged into the residual fluid container (70).

10. Method according to any one of claims 1-8 wherein the coffee machine (10) comprises a residual fluid container (70) for receiving a residual fluid discharged from the drainage outlet (65), and
wherein in step (d) the at least one part of the first quantity of heated fluid supplied in step (c) is discharged into the residual fluid container (70).

11. Method according to any one of claims 1-10, wherein during conveying in accordance with step (c), the heated fluid is at a temperature which is in the range of 75-115°C.

12. Method according to claim 8 or 9, wherein during conveying in accordance with step (e), the heated fluid is at a temperature which is in the range of 75-115°C.

13. Method according to any one of claims 1-12, wherein the first quantity of heated fluid has such a large volume that during step (c) the brewing chamber (35) is fully or partially filled with heated fluid.

14. Method according to claim 8 or 9,
which comprises the following step (h):
(h) before the start of or during step (e), the brewing piston (34) is arranged in such a way that the brewing piston (34) is at a distance (D1) relative to the end surface (40) of the internal space (32) that is equal to a predetermined minimum value.

## Revendications

1. Procédé, destiné à produire une boisson à base de café dans un distributeur de café (10),
le distributeur de café (10) comportant :
un dispositif d'infusion (30) pourvu d'une chambre d'infusion (35) destinée à recevoir du café en poudre,
laquelle chambre d'infusion (35) comprend au moins une entrée (36) de fluide et une sortie (45) de fluide ;
un système (12) de fluide, pourvu d'un conduit d'alimentation (26) de fluide relié avec l'entrée (36) de fluide et d'un système (15) de transport de fluide,
assurant le transport d'un fluide chauffé à travers le conduit d'alimentation (26) de fluide et pourvu d'une sortie de drainage (65), séparée de la sortie (45) de fluide, laquelle sortie de drainage (65) est susceptible d'être amenée en liaison fluidique ou se trouve en liaison fluidique avec la chambre d'infusion (35) et/ou avec le conduit d'alimentation (26) de fluide, de sorte qu'un fluide résiduel puisse être distribué hors du conduit d'alimentation (26) de fluide et/ou de la chambre d'infusion (35) à travers la sortie de drainage (65) ;
le dispositif d'infusion (30) comprenant :
un cylindre d'infusion (31), pourvu d'un espace intérieur (32) qui comporte un axe longitudinal (LA), lequel sur une face frontale, est délimité par une surface frontale (40) s'étendant à la transversale de l'axe longitudinal (LA) et en direction radiale par rapport à l'axe longitudinal (LA) est délimité par une paroi latérale (41) s'étendant autour de l'axe longitudinal (LA) ;
un piston infuseur (34), lequel s'étend dans la direction de l'axe longitudinal (LA), de telle sorte qu'une surface frontale (34a) du piston infuseur (34) soit placée au vis-à-vis de la surface frontale (40) de l'espace intérieur (32),
la chambre d'infusion (35) s'étendant entre la surface frontale (40) de l'espace intérieur (32), la surface frontale (34a) du piston infuseur (34) et la paroi latérale (41) et
le piston infuseur (34) étant mobile le long de l'axe longitudinal (LA), de sorte qu'un écart (D1, D2) entre la surface frontale (40) de l'espace intérieur (32) et le piston infuseur (34) soit variable ;
le procédé comportant les étapes suivantes (a)à(d), consistant à :
(a) introduire une quantité prédéterminée de café en poudre (38) dans la chambre d'infusion (35),
(b) transporter du fluide chauffé à travers le conduit d'alimentation (26) de fluide dans la chambre d'infusion (35), afin de préparer une boisson à base de café, par infusion du café en poudre dans la chambre d'infusion (35) et distribuer une boisson à base de café préparée à partir de la chambre d'infusion (35) à travers la sortie (45) de fluide,
(c) alimenter une première quantité de fluide chauffé à travers le conduit d'alimentation (26) de fluide dans la chambre d'infusion, l'étape (c) étant réalisée avant l'étape (a),
(d) distribuer au moins une partie de la première quantité de fluide chauffé alimentée à l'étape (c) à partir de la chambre d'infusion (35), avant le commencement de l'étape (a),
dans l'étape (d), l'au moins une partie de la première quantité de fluide chauffé alimentée à l'étape (c) étant distribuée à travers la sortie de drainage (65), **caractérisé en ce que**
le procédé comprend les étapes (f) et (g) suivantes :
(f) avant le début de ou pendant l'étape (c), le piston infuseur (34) est placé de telle sorte que le piston infuseur (34) présente un premier écart (D2) prédéfini par rapport à la surface frontale (40) de l'espace intérieur (32) ;
(g) pendant l'étape (d), le piston infuseur (34) est déplacé le long de l'axe longitudinal (LA), de telle sorte que le piston infuseur (34) présente par rapport à la face frontale (40) de l'espace intérieur (32) un écart (D1), lequel est inférieur au premier écart (D2) prédéfini.

2. Procédé selon la revendication 1,
l'étape (c) étant réalisée dans un premier intervalle de temps prédéfini avant le début de l'étape (a).

3. Procédé selon l'une quelconque des revendications 1 ou 2,
l'étape d) étant réalisée dans un deuxième intervalle de temps prédéfini avant le début de l'étape (a).

4. Procédé selon la revendication 3,
l'alimentation de la première quantité de fluide chauffé selon l'étape (c) s'achevant à un premier moment final et le début du deuxième intervalle de temps faisant suite avec une première différence temporelle prédéfinie au premier moment final.

5. Procédé selon la revendication 4,
la première différence temporelle s'élevant à de 0 à 10 secondes.

6. Procédé selon l'une quelconque des revendications 1 à 3,
l'alimentation d'une première quantité de fluide chauffé selon l'étape (c) s'achevant à un premier moment final, l'introduction de la quantité prédéfinie de café en poudre (38) dans la chambre d'infusion (35) selon l'étape (a) s'effectuant après l'étape (c) pendant un troisième intervalle de temps et le début du troisième intervalle de temps s'effectuant avec une deuxième différence temporelle prédéfinie par rapport au premier moment final.

7. Procédé selon la revendication 6,
la deuxième différence temporelle s'élevant à de 1 à 20 secondes.

8. Procédé selon l'une quelconque des revendications 1 à 7,
le procédé comprenant l'étape (e) suivante, consistant à :
(e) transporter une deuxième quantité de fluide chauffé à travers le conduit d'alimentation (26) de fluide et distribuer la deuxième quantité de fluide chauffé à travers la sortie de drainage (65),
l'étape (e) étant réalisée avant l'étape (c).

9. Procédé selon la revendication 8,
le distributeur de café (10) comprenant un réservoir de fluide résiduel (70), destiné à recevoir un fluide résiduel distribué à partir de la sortie de drainage (65), et
dans l'étape (e), la deuxième quantité de fluide chauffé étant distribuée dans le réservoir de fluide résiduel (70) .

10. Procédé selon l'une quelconque des revendications 1 à 8,
le distributeur de café (10) comprenant un réservoir de fluide résiduel (70), destiné à recevoir un fluide résiduel distribué à partir de la sortie de drainage (65), et
dans l'étape (d), l'au moins une partie de la première quantité de fluide chauffé alimentée dans l'étape (c) étant distribuée dans le réservoir de fluide résiduel (70) .

11. Procédé selon l'une quelconque des revendications 1 à 10,
lors de l'alimentation selon l'étape (c), le fluide chauffé présentant une température, laquelle se situe dans l'ordre de 75 à 115 °C.

12. Procédé selon la revendication 8 ou 9,
lors du transport selon l'étape (e), le fluide chauffé présentant une température, laquelle se situe dans l'ordre de 75 à 115 °C.

13. Procédé selon l'une quelconque des revendications 1 à 12,
la première quantité de fluide chauffé présentant un volume lequel est d'une importance telle, que pendant l'étape (c), la chambre d'infusion (35) soit remplie totalement ou partiellement de fluide chauffé.

14. Procédé selon la revendication 8 ou 9,
lequel comporte l'étape (h) suivante :
(h) avant le début de ou pendant l'étape (e), le piston infuseur (34) est placé de telle sorte que le piston infuseur (34) présente par rapport à la surface frontale (40) de l'espace intérieur (32) un écart (D1) qui est égal à une valeur minimale prédéfinie.
